# EUROPEAN PATENT APPLICATION

(11) **EP 0 785 536 A1**
(43) Date of publication of application: **23.07.1997**
(21) Application number: 97100509.5
(22) Date of filing: 15.01.1997
(51) Int. Cl.: G08G 5/06

(54) **Airport surface traffic monitoring system**

(30) Priority: 22.01.1996 IT MI960100
(71) Applicant: Oerlikon-Contraves S.p.A., 00131 Roma (IT); Associazione Vito Volterra Centro Culturale Interdipartimentale Dell' Università di Roma "Tor Vergata", 00133 Roma (IT)
(72) Inventor: Ferri, Mauro, 00040 - Montecompatri (Roma) (IT); Galati, Gaspare, 00162 - Roma (IT)
(74) Representative: Forattini, Amelia

(57) **Abstract**

An airport surface traffic monitoring system includes a plurality of sensors suitable to detect signals from the airport surface. The signals are sent to a signal and sensor image processing unit suitable to provide in output the exact location of aircraft, moving or stationary vehicles, and of obstacles for controlling traffic on the airport surface.

## Description

The present invention relates to an airport surface traffic monitoring system.

In particular, the invention relates to airport surface movement guidance and control systems, for the safety and efficiency of airport ground traffic. More particularly, the invention is in the field of the monitoring function.

Airports worldwide are currently affected by an amount of air traffic which is often close to the maximum limit of their capacity and is further increased by the corresponding traffic flow of all the support vehicles which are indispensable in order to ensure the operation of the airport. Accordingly, ground traffic management is becoming increasingly difficult and subject to a considerable risk of accidents.

In most airports, monitoring is currently performed substantially by means of direct visual observation carried out by the controllers from the control tower, complemented by the position reports sent by the pilots and by the drivers of the various vehicles which are present on the airport surface.

In poor visibility conditions, typically at nighttime or in bad weather, in some airports the controller is assisted by a radar sensor for surface movement control, known as SMR (Surface Movement Radar) or ASDE (Airport Surface Detection Equipment) which operates at frequencies below 40 GHz.

The information provided by this kind of radar, which has a relatively long range capable of covering the entire surface involved but is not able to identify the detected objects, must be interpreted by the controller.

Especially in poor visibility conditions, the controller must mentally visualize a "picture" of the situation of the traffic on the airport surface in addition of course to planning the flow of the traffic. Obviously, such a task is extremely demanding due to the large number of trucks, vehicles, and the like which are present on the airport surface in addition to the aircraft.

Current radar monitoring systems are heavily hindered by the poor resolution and poor precision of the radar sensor, by masking effects caused by the inevitable presence of obstacles in the area of interest, and by difficulties in promptly identifying the targets for safety purposes, particularly as regards the danger of collisions between vehicles or between vehicles and obstacles.

Furthermore, the position and movement information dictated by controllers to the individual aircraft and trucks that move on the airport surface are currently sent by radio, using channels which are already overloaded.

The document "Sistema di guida e controllo del movimento a terra", F.G. Monzel, A. Bories, Prospettive di telecomunicazioni - 1st quarter 1993 describes a control system which should partly solve these problems; however, even this system has insufficient resolution in addition to being complicated and expensive.

The aim of the present invention is to provide an airport surface traffic monitoring system which is capable of ensuring safe, orderly and efficient traffic flow even in poor visibility conditions and in bad weather.

Within the scope of this aim, an object of the invention is to provide an airport surface traffic monitoring system which allows to locate the aircraft and the other vehicles and occasional obstacles, eliminating the effects of interference.

A further object of the present invention is to provide an airport surface traffic monitoring system which allows to cover the airport surface with a better resolution than conventional systems.

A further object of the invention is to provide an airport surface traffic monitoring system which is capable of using radar images to clearly locate and identify the various aircraft and vehicles.

A further object of the present invention is to provide an airport surface traffic monitoring system which is simple to manufacture and highly reliable and has a competitive cost.

This aim, these objects, and others which will become apparent hereinafter are achieved by an airport surface traffic monitoring system, characterized in that it comprises a plurality of sensors which are suitable to detect signals from the airport surface, the signals being sent to devices for processing signals and images of the sensors, which are suitable to provide in output the exact location of aircraft, moving or stationary vehicles and of obstacles in order to control the traffic on the airport surface.

Further characteristics and advantages will become apparent from the description of a preferred but not exclusive embodiment of the invention, illustrated only by way of non-limitative example in the accompanying drawings, wherein:
Figure 1 is a block diagram of the system according to the present invention; and
Figure 2 is a block diagram of one of the miniradars used in the block diagram of Figure 1.

With reference to the above figures, the system according to the invention includes a plurality of sensors which are connected to a subsystem for processing the signals and data of the sensors over high-capacity communications channels, advantageously provided by means of optical fibers.

The sensors that are used are small radars 1 (miniradars), which are characterized by small dimensions with respect to the state of the art and by low weight and cost, which can be achieved by using millimeter waves with higher frequencies than those used by existing systems (<40 GHz). These miniradars 1 are placed in elevated locations (buildings, pylons) in the airport area or in the immediate vicinity. The number of these miniradars typically varies from 1 to 5, depending on the structure of the particular airport in which they are used.

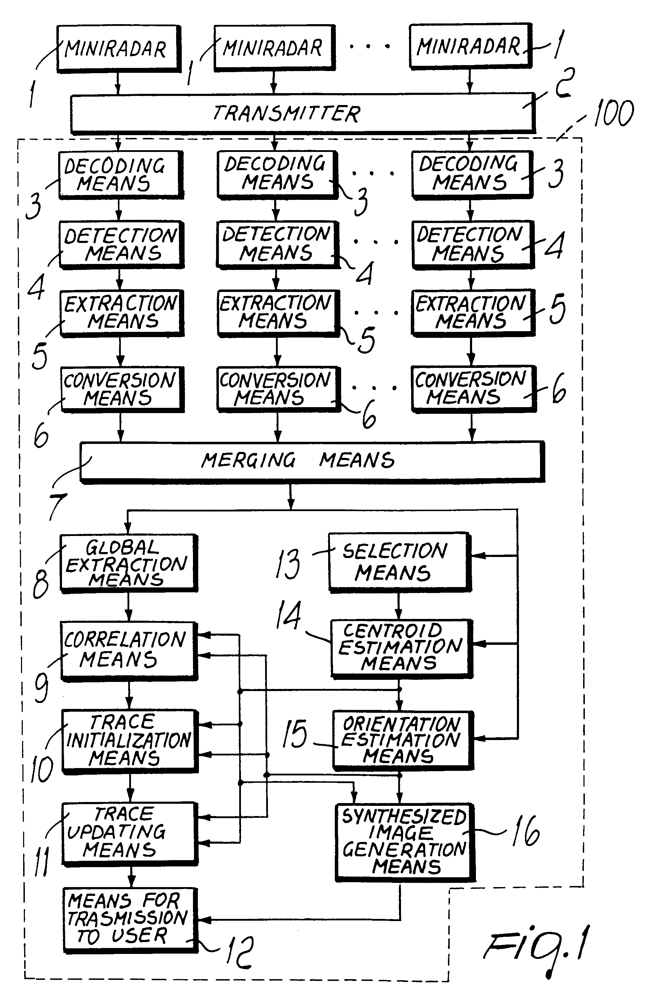

By way of example and for the sake of greater clarity, Figure 1 illustrates the block diagram of the system according to the invention in the case in which there are three miniradars 1.

The miniradars 1 have a range which is shorter than the dimensions of the airport surface and are organized like a network so as to ensure optimum coverage of the airport surface.

The miniradars 1 use millimeter frequencies both during reception and during transmission in order to have small antennas.

The use of these millimeter frequencies prevents electromagnetic compatibility problems in the operating environment and minimizes the effects caused by ground reflections.

Frequencies around 95 GHz are used in a preferred embodiment.

The miniradars 1 are connected to the processing subsystem by means of a transmission means 2, which is advantageously constituted by optical fibers.

The transmission means 2 connects each miniradar 1 to a means 100 for processing the signals and the data of the miniradars.

In particular, the transmission means 2 connects each miniradar 1 to a corresponding demodulation and decoding means conveniently constituted by a demodulator decoder 3 which is suitable to convert the signal into a numeric representation.

The signal in output from each demodulator decoder 3 enters a signal processing and detection means 4 suitable to eliminate the effects of the interference caused by unwanted echoes and by noise.

A local radar data extraction means 5 is cascade-connected to the signal processing and detection means and is suitable to provide, in output, data in polar-coordinate form, which are sent to a converter means 6 suitable to convert the polar representation into an X-Y representation.

The outputs of the various conversion means 6, one for each miniradar 1, are sent to a radar data merging means 7.

A global radar data extraction means 8 is cascade-connected to the merging means 7 and is suitable to generate numeric messages which indicate the presence and the position of the objects of interest.

The output of the global extraction means 8 is sent to a correlation means 9, suitable to correlate the numeric messages that indicate the presence and position of objects of interest with summary indications of moving vehicles with their corresponding path and, if available, their identification (hereinafter termed "traces").

The output of the correlation means 9 is sent to a trace initialization means 10, which initializes a new trace if the comparison performed by the correlation means 9 does not yield a match between the numeric message (hereinafter referenced as "plot") and an existing trace.

The output of the initialization means 10 is sent to a trace updating means 11, which sends its output to a transmission means 12 suitable to display the result to the controller assigned to airport surface traffic monitoring.

The output signal from the merging means 7 is sent not only to the global extraction means but also to an image processing means. The image processing means includes an area selection means 13, a centroid estimation means 14, an orientation estimation means 15, and a synthesized image generation means 16.

The area selection means 13 is suitable to select a specific area which includes a single target of interest for transfer to a subsequent means 14 for estimating the centroid of the target and its extension.

The output of the centroid estimation means 14 is sent to the correlation means 9, to the trace initialization means 10, and to the trace updating means 11.

The same output of the merging means 7 and the output of the centroid estimation means 14 are sent to a target orientation estimation means 15, whose output is sent on the one hand to a synthesized image generation means 16 and on the other hand to the correlation means 9, to the trace initialization means 10, and to the trace updating means 11.

The synthesized image generation means then sends its output to the means 12 for transmission to the user.

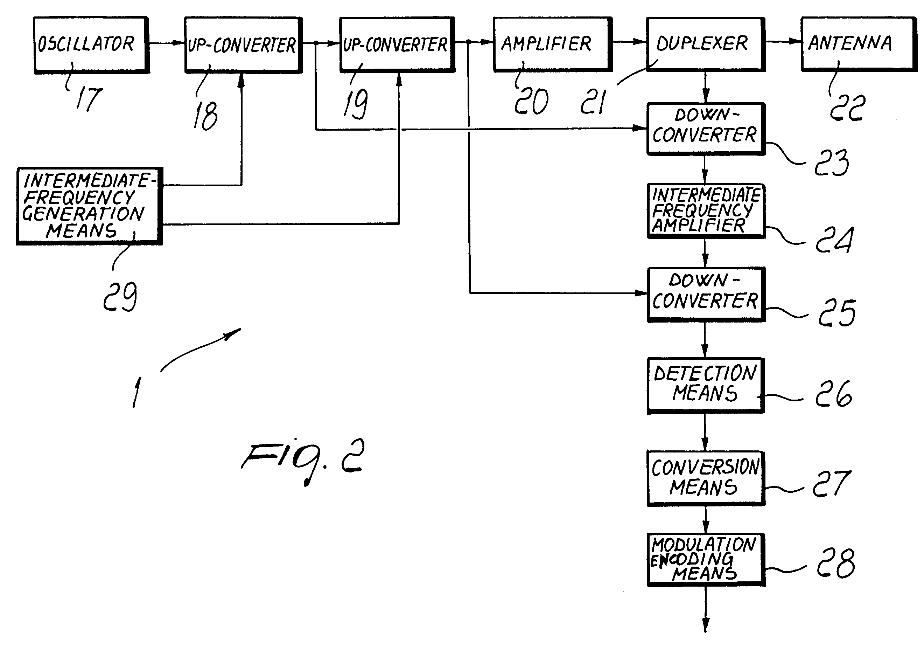

In detail, as shown in Figure 2, each miniradar 1 includes a transmission and reception means constituted by a solid-state transceiver, an antenna, and a circuit for encoding and modulating the raw signals produced by the miniradar to transmit them to the processing subsystem.

The entire miniradar revolves about a vertical axis at a typical rate of one revolution per second.

More particularly, each miniradar 1 includes a reflector-type antenna 22 which provides the optimum radiation pattern for the applications being considered, particularly a lobe that is very narrow in the azimuth plane so as to achieve the necessary high angular discrimination, and is shaped in the vertical plane so as to receive, for a set target, an echo power that is independent of the distance of the object of interest in the range of the radar.

The antenna 22, in addition to having a linear polarization, has a circular polarization in order to increase the signal ratio between the useful signal and rain echo.

A duplexer 21 provides the connection between the antenna 22 on one side and the receiver and transmitter on the other side, according to techniques which are well-known to the persons skilled in the art and are described for example in the book by M.I. Skonlik "Introduction to the radar system", McGraw-Hill, 2nd edition, chapter 9, pages 359-366.

The transmitter is of the solid-state type, which can be used in this case by virtue of the low power that is required, but it might also be of the amplifier-tube or oscillator type without altering the subject of the present invention.

In a preferred embodiment, described hereinafter, it is essentially composed of a stable millimeter-band oscillator 17 whose radio-frequency signal, before being transmitted to the antenna 22 through the duplexer 21, passes through a first up-converter 18 so as to vary the transmitted frequency from pulse to pulse or from one group of pulses to the next, and then through a second up-converter 19, to allow medium-frequency conversion, and through a millimeter-band power amplifier with solid-state technology 20, where the transmitted pulse is generated; the pulse has a very short duration so as to allow high distance discrimination.

In order to achieve the two up-conversions of the transmitted frequency, by means of the two converters 18 and 19, and still ensure the stability of the millimeter-band oscillator 17, an intermediate reference frequency generator 29 is used for the unequivocal synchronization of all the frequencies of the miniradar 1.

The receiver of the miniradar 1 is of the superheterodyne type (a type which is well-known to the persons skilled in the art) and is composed of a first down-converter 23, which is required in order to take into account the variation of the transmitted frequency from one pulse or group of pulses to the next, of an intermediate-frequency signal amplifier 24, of a second down-converter 25 to obtain the video signal, and finally of a detector stage 26 to obtain the amplitude information of the received echo signal.

The final part of the receiver is constituted by a stage 27 for converting the received echo amplitude signal from the analog format to the digital one, and finally by an encoding and modulation stage 28 to adapt the signal to the transmission thereof over the communications channel 2 towards the central processing system, which is provided by virtue of optical fibers in the preferred embodiment.

With reference to the above figures, the operation of the system according to the invention is as follows.

The raw signals that arrive from the miniradars 1 represent the amplitude of the radar echo by means of an appropriate representation scale; they are sent to the processing subsystem over the transmission means 2, which in the preferred embodiment is constituted by optical fibers and can also be constituted by radio links of adequate capacity.

At the processing subsystem, the signal that arrives from each miniradar 1 is input to the demodulator decoder 3, where it is converted to the numeric representation that is most suited to the subsequent processing operations, according to methods that are well-known to the persons skilled in the art.

The signal then enters the signal processing and detection means 4, which has the purpose of eliminating the effects of the interference produced by unwanted echoes and noise and of providing in output the indications of the presence of echoes originating from targets of interest (aircraft, vehicles, obstacles).

In particular, the signal processing and detection means 4 internally include a detection threshold of the "time integration" type, which provides an estimate of the average interference level for each resolving cell of the radar.

This estimate, multiplied by a suitable parameter, provides the detection threshold used for the particular resolving cell.

In the present invention, the multiplying parameter takes on two separate values: the first one, which is higher, is used before echo detection occurs, whereas the second one, which is lower, is used after detection of an echo, so as to avoid compromising the detection of slow and/or large targets.

For the same reason, the time constant of time integration is provided so that it can vary between two separate values, the first one to be applied before detection of the target and the second one to be applied after detection of the target.

Detection indications are transferred to the local radar data extraction means 5, which correlates these indications with the current distance and azimuth indications, providing in output data in polar-coordinate form, which are sent to the subsequent coordinate conversion means 6 which, by using algorithms that are well-known to the persons skilled in the art, performs real-time conversion from polar coordinates to X-Y coordinates, according to an X-Y reference system which is rigidly linked to the monitoring area and is therefore common to all the miniradars 1.

The outputs of the various coordinate conversion means 6, one for each miniradar, are sent to the radar data merging means 7, which in the above mentioned common reference system merges the information from the various miniradars, generating unique detections by virtue of elementary logic operations that are well-known to the persons skilled in the art.

The resulting detections are transferred to the global radar data extraction means 8 which, by virtue of techniques that are well-known to the persons skilled in the art, generates numeric messages, known as "plots", which indicate the presence and position of the objects of interest (aircraft, vehicles, occasional obstacles).

The plots are sent to the subsequent radar tracking subsystem, which is constituted by the following functions:
-- correlation between the plot and the trace (provided by the correlation means 9), in which a check whether each plot can be ascribed or not to an existing trace is performed by comparing the position of the plots and the summary indications of moving vehicles with their corresponding path and, if available, their identification, that is to say, the so-called "traces";
-- initialization of a trace (provided by the initialization means 10), by virtue of which the plots that do not correlate with existing traces produce new traces by means of appropriate logic systems;
-- updating of the trace (11), by virtue of which, as a function of the localization of the plot that correlates with the trace and of the extrapolated trace with the current trace, the optimum estimate of the position, orientation, and speed of the object of interest is produced.

These functions, in a preferred embodiment of the present invention, are made more accurate and effective by virtue of information which originates from the image processing subsystem, whose functions are described hereafter.

The outputs of the radar data merging means 7 are transferred to the area selection means 13, which on command from an operator or from the general airport traffic management system extract the outputs of the merging means that belong to a rectangular window within the above mentioned reference system rigidly linked to the surface of interest.

The dimensions and position of the window are such as to include a single target of interest for transfer to the subsequent centroid estimation means 14, wherein, by means of weighted-average algorithms, the centroid of the radar image of the target and its size are estimated.

The same output of the merging means 7 and the output of the centroid estimation means 14 are sent to the orientation estimation means 15, in which the orientation angle of the target, that is to say, the direction of its front end with respect to the north, is estimated.

The outputs of the centroid estimation means 14 and of the orientation estimation means 15 are sent to the correlation means 9, to the trace initialization means 10, and to the trace updating means 11 in order to produce significant improvements in the correlation between the plot and the trace, in trace initialization, and in trace updating, by virtue of the considerable increase in the amount of information on the target provided by the image processing performed in the centroid estimation means 14 and in the orientation estimation means 15.

The information obtained by the radar image processing performed by the means 14 and 15 is used in the tracking process, performed by the trace correlation means 9, the trace initialization means 10, and the trace updating means 11 by means of an optimum nonlinear filtering or by means of a linearized filtering (Kalman filter techniques).

Finally, the outputs of the centroid estimation means 14 and of the orientation estimation means 15 are sent to the synthesized image generation means 16 which, by means of techniques well-known to the persons skilled in the art, prepares the radar information for display by virtue of a commercial-type display system.

The means 12 for transmission to the user receives the outputs of the trace updating means 11 and of the synthesized image generation means 16 and transmits them to the user for the traffic monitoring purposes of the present invention.

In practice it has been observed that the system according to the invention achieves the intended aim and objects, since it allows to monitor the entire airport surface by virtue of a network of small, low-cost radars 1 and of a subsystem for processing the data produced by the radars 1 which has a high resolution and is capable of identifying the various targets which are present in the area of interest.

In this manner, the controller assigned to monitoring the traffic on the airport surface has a system which is capable of locating the aircraft and the other vehicles, as well as occasional obstacles, eliminating the effects of various kinds of interference.

Furthermore, the system according to the invention also uses the radar images of the aircraft provided by virtue of the high spatial resolution of each one of the miniradars 1.

The airport surface traffic monitoring system can be used by modern control, monitoring, and guidance systems known to airport traffic control experts as SMGCS (Surface Movement Guidance and Control System) with new functions for processing and displaying the radar images with high resolution in order to provide more effective automatic or controller-dependent solving of possible conflicts between vehicles and occasional obstacles.

The system according to the invention can also be applied to the radar monitoring of sea and river ports or of traffic in other confined spaces.

The system according to the invention is susceptible of numerous modifications and variations, all of which are within the scope of the claims; all the details may be replaced with other technically equivalent elements.

The materials employed, as well as the dimensions, may of course be any according to the requirements and the state of the art.

## Claims

1. Airport surface traffic monitoring system, characterized in that it comprises a plurality of sensors (1) adapted to detect signals from the airport surface, said signals being send to a means (100) for processing the signals of said sensors which provides in output the exact location of aircraft, stationary or moving vehicles, and obstacles in order to control traffic on the airport surface.

2. System according to claim 1, characterized in that said sensors comprise mini radars (1).

3. System according to claim 2, characterized in that each of said mini radars has a range that is shorter than the airport surface to be covered.

4. System according to claim 2, characterized in that said mini radars are arranged so as to cover the entire airport surface together.

5. System according to claim 2, characterized in that said mini radars use millimeter frequencies for both transmission and reception.

6. System according to claim 2, characterized in that each of said radars (1) comprises a transmission and reception means, an antenna (22), and a means for encoding and modulating the raw signals produced by said radars for transmission to the signal processing means.

7. System according to claim 2, characterized in that said radars are connected to said signal processing means by optical fibers.

8. System according to claim 2, characterized in that said radars are connected to said signal processing means by high-capacity radio channels.

9. System according to claim 6, characterized in that said antenna is a millimeter-band reflector antenna.

10. System according to claim 6, characterized in that said transmission and reception means of said radars comprises a solid-state transmitter and a superheterodyne receiver.

11. System according to claim 6, characterized in that said transmitter of said radars is an amplifier-tube transmitter.

12. System according to claim 6, characterized in that said transmitter of said radars is an oscillator-type transmitter.

13. System according to claim 10, characterized in that said transmission and reception means of said radars is connected to said antenna by a duplexer.

14. System according to claim 10, characterized in that said transmission means of said radars comprises a stable oscillator in the millimeter band, said oscillator being adapted to generate a radio-frequency signal, a first up-converter adapted to vary the transmitted frequency from pulse to pulse or from one group of pulses to the next, a second up-converter adapted to perform medium-frequency conversion, and a power amplifier.

15. System according to claim 14, characterized in that it comprises an intermediate-frequency generator having an output connected to said first and second up-converters, said intermediate-frequency generator being adapted to maintain the stability of said oscillator.

16. System according to claim 10, characterized in that said reception means of said radars comprises a first down-converter, an intermediate-frequency signal amplifier, a second down-converter, and a detection stage adapted to detect the amplitude of the echo signal received by said reception means.

17. System according to claim 16, characterized in that it comprises a conversion means connected to the output of said detection stage, said conversion means being adapted to convert said received echo amplitude signal into a digital signal.

18. System according to claim 17, characterized in that said encoding and modulation means is connected to the output of said conversion means and is adapted to prepare said received echo amplitude signal for transmission to said signal processing means.

19. System according to claim 2, characterized in that said signal and radar data processing means comprises, for each one of said radars, a demodulation and decoding means adapted to demodulate and decode the input signal into a numeric representation; a processing and detection means adapted to provide in output a detection threshold; a local extraction means adapted to provide position data in polar-coordinate form; and a conversion means adapted to convert said position data from polar coordinates to X-Y coordinates according to a single reference which is common to all of said radars.

20. System according to claim 19, characterized in that said signal and radar data processing means furthermore comprises a merging means adapted to merge the signals that originate from said radars, in order to obtain a single position data item for each target detected by said radars together.

21. System according to claim 19, characterized in that said processing and detection means is of the time integration type and is adapted to provide an estimate of the average level of the interference for each resolving cell of said radars; said estimate, multiplied by a parameter, providing the detection threshold used for the particular resolving cell.

22. System according to claim 21, characterized in that said multiplying parameter assumes a first value and a second value in two separate moments, said first value being used before the detection of an echo, said second value being used after the detection of said echo, said first value being higher than said second value.

23. System according to claim 21, characterized in that the time constant of the time integration of said processing and detection means can vary between a first value and a second value, said first value being applied before the detection of an echo, said second value being applied after the detection of said echo.

24. System according to claim 2, characterized in that said signal and radar data processing means furthermore comprises a global extraction means adapted to generate numeric messages which indicate the position of targets of interest, a correlation means adapted to perform a position comparison between said numeric messages and existing paths of moving targets, a path initialization means adapted to initialize a new path following a failed comparison in said correlation means, a path updating means, and a means for transmission to the user.

25. System according to one or more of the preceding claims, characterized in that the output of said merging means is sent to said image processing means.

26. System according to claim 25, characterized in that said image processing means comprises an area selection means adapted to select an area of the airport surface which contains a single target of interest, a means for estimating the centroid of the radar image adapted to estimate the centroid of said target of interest, and an orientation estimation means adapted to estimate the orientation angle of the target with respect to the magnetic north.

27. System according to claim 26, characterized in that it furthermore comprises a means for generating synthesized images which are cascade-connected to said orientation estimation means and is adapted to prepare the resulting radar images for display.

28. System according to claim 26, characterized in that the output of said centroid estimation means and the output of said orientation estimation means are sent to the correlation means, to the path initialization means, and to the path updating means.
